# EUROPÄISCHE PATENTANMELDUNG

(11) **EP 3 078 273 A1**
(43) Veröffentlichungstag der Anmeldung: **12.10.2016**
(21) Anmeldenummer: 15162864.1
(22) Anmeldetag: 08.04.2015
(51) Int. Cl.: A23C 9/13, A23C 9/133, A23C 9/137

(54) **SAUERMILCHERZEUGNIS ALS BASIS FÜR COCKTAIL-DESSERTS**

(71) Anmelder: DMK Deutsches Milchkontor GmbH, 27404 Zeven (DE)
(72) Erfinder: Hoch, Matthias, 27404 Zeven (DE); Liedt, Andreas, 48653 Coesfeld (DE); Liedt, Olaf, 48653 Coesfeld (DE)
(74) Vertreter: Fabry, Bernd

(57) **Zusammenfassung**

Die Erfindung liegt auf dem Gebiet Nahrungs- und Lebensmittel und betrifft löffelfähige Desserts auf Basis von Sauermilch, die einen Cocktailgeschmack aufweisen, wie beispielsweise Caipirinha, Copacabana, Margarita, Tequila Sunrise usw. Die erfindungsgemäßen löffelfähigen Cocktail-Desserts können alkoholhaltig oder alkoholfrei sein.

## Beschreibung

### GEBIET DER ERFINDUNG

Die Erfindung liegt auf dem Gebiet Nahrungs- und Lebensmittel und betrifft löffelfähige Desserts auf Basis von Sauermilch, die einen Cocktailgeschmack aufweisen, wie beispielsweise Caipirinha, Copacabana, Margarita, Tequila Sunrise usw. Die erfindungsgemäßen löffelfähigen Cocktail-Desserts können alkoholhaltig oder alkoholfrei sein.

### STAND DER TECHNIK

Sauermilch wird durch Gärung von natürlich vorkommenden oder zugesetzten Mikroorganismen (Milchsäurebakterien) in Milch hergestellt. Durch die Stoffwechseltätigkeit der Mikroorganismen wird Lactose in der zu Milchsäure abgebaut. Dabei bilden sich charakteristische Aromastoffe wie Acetaldehyd, Aceton, Butanon usw. Die Milch kann vor dem impfen auf den Fettgehalt eingestellt (z.B. auf Magermilch), pasteurisiert und homogenisiert werden. Durch die Säuerung (Impfung) werden Fäulnis- und Krankheitserreger (wie etwa Staphylokokken) unterdrückt und indem die Milch bei bestimmten Temperaturen zum Gerinnen gebracht wird, fällt das Milcheiweiß (Casein) aus. Sobald ein bestimmter Säuregrad erreicht ist, wird die Milch schnell herabgekühlt, um die Milchsäurebakterien in ihrer Aktivität zu hindern. Die natürlich gebildete Säure in der Sauermilch ist ein gutes Konservierungsmittel, darum bleiben Sauermilchprodukte länger haltbar als nur pasteurisierte Milchprodukte. Die Beschaffenheit eines Sauermilchprodukts ist nach dem Säuern stichfest, man kann sie löffeln. Der Geschmack von Sauermilchprodukten kann über den Säuregrad eingestellt werden, indem die Säuerung bei einem bestimmten Säuregrad unterbrochen wird. Die Auswahl der eingesetzten Bakterienkulturen hat ebenfalls Einfluss auf den Geschmack, so dass diese von mild bis kräftig sauer reichen kann.

Durch die Auswahl von verschiedenen Bedingungen unterscheiden sich Sauermilchprodukte voneinander: a) die verwendete Milch (Kuhmilch oder Milch von anderen Tieren), b) die zugesetzten Mikroorganismen, c) Dauer und Temperatur der Brütung, d) der Fettgehalt.

Im Nahrungs- und Lebensmittelbereich ist ein großer Markt für probiotische Produkte vorhanden. Sauermilchprodukte sind insbesondere gefragt, da ihnen aufgrund der enthaltenen Bakterien eine gesundheitsfördernde Wirkung zugeschrieben wird, insbesondere bezogen auf die menschliche Darmflora. So gelten insbesondere Joghurtprodukte als verdauungsfördernd und darmreinigend, weshalb in Europa eine erhebliche Menge an derartigen Produkten konsumiert wird.

Die Aufgabe der vorliegenden Erfindung bestand daher darin, ein neues Dessert bereitzustellen, welches auf Sauermilchbasis aufgebaut ist, um dem Verbrauchern einen positiven ernährungsphysiologischen Vorteil eines probiotischen Milchproduktes anbieten zu können. Gleichzeitig sollte die erfindungsgemäße Basiszusammensetzung größtmögliche Stabilität aufweisen und eine Grundrezeptur für eine breite Geschmackspalette darstellen. Weiterhin war es Aufgabe der vorliegenden Erfindung eine Grundmasse auf Sauermilchbasis bereitzustellen, welche für eine große Anzahl von Menschen verträglicher ist, da der Gehalt an Lactose niedriger ist als es in reinen Milchprodukten der Fall ist.

### BESCHREIBUNG DER ERFINDUNG

Ein erster Gegenstand der Erfindung betrifft daher Dessert mit Cocktailgeschmack umfassend
(a) eine Basis aus einem Sauermilcherzeugnis, ausgewählt aus der Gruppe bestehend aus Creme fraîche, Quark, Joghurt, Saure Sahne, Schmand oder Mischungen daraus, und
(b) weitere Zutaten, die dem Verbraucher beim Verzehr eine Cocktail-Geschmacksnote vermittelt.

Ein erfindungsgemäßes Dessert ist demgemäß auch als Cocktail-Dessert zu verstehen.

Der Cocktailgeschmack eines erfindungsgemäßen Desserts geht, vorzugsweise in Richtung Caipirinha, Copacabana, Tequila Sunrise, Malibu Reggae, Cuba Libre, Pina Colada, Mojito, Malibu Mango, Margarita, Hugo oder in jede bekannte Richtung, die ein marktüblicher Cocktail aufweist.

In einer bevorzugten Ausführungsform umfasst ein erfindungsgemäßes Cocktail-Dessert als weitere Zutaten b) die folgenden Komponenten:
(i) 0,001 bis 5,0 Gew.-% Stabilisatoren,
(ii) 0 bis 25 Gew.-% Zucker und/oder Zuckeraustauschstoffe und/oder Süßstoffe,
(iii) 0 bis 5.0 Gew.-% Alkohol,
(iv) 0,1 bis 20 Gew.-% Aromastoffe,
(v) 0 bis 80 Gew.-% weitere Additive,
(vi) 0 bis 25 Gew.-% Fruchtzubereitungen,
mit der Maßgabe, dass sich die Komponenten (i) bis (vi) zu 100 Gew.-% addieren.

Ein Dessert auf Sauermilchbasis weist nicht nur einen ernährungsphysiologischen Wert auf, sondern ist auch, durch den Einsatz von Mikroorgansimen, die in der Sauermilch durch die Säuerung Lactose abbaut, verträglicher für Konsumenten, die Produkte mit hohem Lactosegehalt nicht so gut vertragen. Überraschenderweise hat sich zudem gezeigt, dass die erfindungsgemäßen Cocktail-Desserts dem Verbraucher beim Verzehr ein neues und anderes Geschmackerlebnis vermittelt als die bisher bekannten Desserts. Die neuen erfindungsgemäßen Cocktail-Desserts sind erfrischend, cremig und zeichnen sich durch neu kreierte Geschmacksnoten aus, die vor allem nach "Sommer" oder "Urlaub" schmecken.

In einer bevorzugten Ausführungsform ist die Sauermilchbasis für das erfindungsgemäße Dessert Joghurt, welches aus Joghurtmilch stammt und, welches ausgewählt ist aus Mager-, oder Rahmmilch und im Fettgehalt standardisierte Milch, wobei der Joghurt ein stichfester oder gerührter Joghurt ist und / oder Quark ist, das einen Fettgehalt von unter 65 % aufweist, vorzugsweise unter 40 Gew.-%, besonders bevorzugt unter 25 Gew.-% und ganz besonders bevorzugt 6 Gew.-% ist.

In einer bevorzugten Ausführungsform liegt der Fettgehalt in der Joghurtmilch von 0,1 bis 40 Gew.-%. Bevorzugt ist Joghurt aus Joghurtmilch bzw. Magermilch, wobei der Fettgehalt vorzugsweise bei etwa 15 Gew.-%, bevorzugt bei etwa 3 bis etwa 4 Gew.-%, besonders bevorzugt bei 0,1 Gew.-% liegt.

In einer bevorzugten Ausführungsform handelt es sich beim erfindungsgemäßen Cocktail-Dessert um ein alkoholhaltiges Dessert, wobei das Dessert einen (Gesamt-) Alkoholgehalt von 0,01 bis 10 Gew.-%, aufweist.

Ferner kann es sich in einer weiteren bevorzugten Ausführungsform auch beim erfindungsgemäßen Cocktail-Dessert um ein alkoholfreies Dessert handeln.

In einer weiteren bevorzugten Ausführungsform liegt/liegen der Alkohol oder die Aromastoffe im erfindungsgemäßen Dessert als Alkoholperlen und/oder -kapseln bzw. Aromaperlen und/oder -kapseln vor, welche beim Verzehr freigesetzt wird.

Vorzugsweise umfasst ein erfindungsgemäßes Dessert nach weitere Additive v), die bevorzugt ausgewählt sind aus Süßstoffe, Lebensmittelsäure, Verdickungsmittel, Reduktionsmittel, Aromastoffe, Vitamine, Prebiotische Stoffe, Probiotische Stoffe, Geschmacksverstärker, Wirkstoffe zur Maskierung von unangenehmen Geschmackseindrücken, Antioxidantien, Milcheiweißkonzentrate, Lebensmittelfarbstoffe, Lebensmittelpartikel, wie (brauner Rohr-) Zucker und/oder Kokos(raspeln), (gefrier-) getrocknete Früchte, Schokostücke usw. und Gemischen davon.

In einer bevorzugten Ausführungsform handelt es sich beim erfindungsgemäßen Cocktail-Dessert um ein löffelfähiges Dessert.

In einer bevorzugten Ausführungsform wird der Cocktailgeschmack durch Aromastoffe vermittelt, so dass das Dessert alkoholfrei ist. Bei solchen alkoholfreien Desserts wird die Geschmacksrichtung wie beispielsweise Caipirinha, Copacabana, Tequila Sunrise, Malibu Reggae, Cuba Libre, Pina Colada, Mojito, Malibu Mango, Margarita, Hugo usw. vorzugsweise durch künstliche Aromastoffe und Aromen erzeugt, wobei die alkoholfreien Zutaten wie Limettenzubereitungen, und Mangozubereitungen, welche typische Inhaltsstoffe für Cocktails sind, ebenfalls mit in die Sauermilcherzeugnisbasis eingemischt und vermischt werden kann oder auch separat vor dem Verzehr vorliegen kann und erst kurz vor dem Verzehr dazu gemischt wird. In solchen alkoholfreien Desserts wird vorzugsweise der Alkoholgeschmack ebenfalls künstlich durch Aromastoffe kreiert.

Im Falle Lebensmittelpartikel (weitere Additive: Komponente v) wie (brauner Rohr-) Zucker und/oder Kokos(raspeln), (gefrier-) getrocknete Früchte, Schokostücke und ähnliche Zutaten, liegen diese bei den erfindungsgemäßen Desserts vorzugsweise separat von der Sauermilcherzeugnisbasis vor, und werden vorzugsweise erst kurz vor dem Verzehr zu der Sauermilcherzeugnisbasis dazugegeben

Auf dieser Weise werden der (braunen Rohr-) Zucker und die Kokos(rapseln) nicht aufgeweicht. Diese Komponenten liegen vorzugsweise physisch vom Dessertgemisch (beispielsweise durch eine Trennwand im Becher) getrennt vor.

Der verwendete Alkohol für ein solches Dessert ist je nach gewünschter Cocktail-Geschmacksrichtung vorzugsweise, die dafür bekannten einzusetzen Alkoholsorten.

Ein weiterer Gegenstand der vorliegend Erfindung ist ein Verfahren zur Herstellung eines erfindungsgemäßen Desserts, wobei
(a) eine Basis aus einem Sauermilcherzeugnis, ausgewählt aus der Gruppe bestehend aus Creme fraîche, Quark, Joghurt, Saure Sahne, Schmand oder Mischungen daraus, bereitgestellt wird und mit
(b) weiteren Zutaten,
   umfassend
   (i) 0,001 bis 5,0 Gew.-% Stabilisatoren,
   (ii) 0 bis 25 Gew.-% Zucker und / oder Zuckeraustauschstoffe und / oder Süßstoffe,
   (iii) 0 bis 5,0 Gew.-% Alkohol,
   (iv) 0,1 bis 20 Gew.-% Aromastoffe,
   (v) 0 bis 80 Gew.-% Additive,
   (vi) 0 bis 25 Gew.-% Fruchtzubereitung,
versetzt wird, mit der Maßgabe, dass sich die Komponenten (i) bis (vi) zu 100 Gew.-% addieren.

In einer bevorzugten Ausführungsform des Verfahrens handelt es bei den Additiven (v) bei den weiteren Zutaten vorzugsweise um Lebensmittelpartikel, wobei es sich bevorzugt um (gefrier-) getrocknete Früchte, Schokostücke (brauner Rohr-) Zucker und/oder Kokos(raspeln) handelt, die vor dem Verzehr separat von der Sauermilchbasis a) vorliegt und erst kurz vor dem Verzehr dazugegeben wird.

In einer bevorzugten Ausführungsform des Verfahrens wird der Cocktail-Geschmack
(a) Caipirinha: durch Limettenzubereitung, Cachaca und braunen Rohzucker,
(b) Tequila Sunrise: durch Orangenzubereitung, eine Mischung aus Tequila und Grenadine,
(c) Malibu Reggae: durch Limettenzubereitung, eine Alkoholmischung aus Malibu, Batida de Coco und Grenadine und braunen Rohrzucker,
(d) Cuba Libre: durch Limettenzubereitung, eine Mischung aus Cola-Zitronenzubereitung und Weißem oder braunem Rum und braunen Rohzucker,
(e) Pina Colada: durch Pinacoladazubereitung, weißem oder braunem Rum und Kokosraspeln,
(g) Mojito durch Limettenzubereitung, eine Mischung aus weißem oder braunem Rum und Limetten- und Pfefferminzsirup und braunen Rohrzucker,
(f) Malibu Mango: durch Mangozubereitung, eine Mischung aus weißem oder braunem Rum und Malibu, und Kokosraspeln,
kreiert.

Ein weiterer Gegenstand der vorliegenden Erfindung ist die Verwendung
(a) einer Basis aus einem Sauermilcherzeugnis, ausgewählt aus der Gruppe bestehend aus Creme fraîche, Quark, Joghurt, Saure Sahne, Schmand oder Mischungen daraus, bereitgestellt wird und
(b) weiteren Zutaten,
   umfassend
   (i) 0,001 bis 5,0 Gew.-% Stabilisatoren,
   (ii) 0 bis 25 Gew.-% Zucker und/oder Zuckeraustauschstoffe und/oder Süßstoffe,
   (iii) 0 bis 5,0 Gew.-% Alkohol,
   (iv) 0,1 bis 20 Gew.-% Aromastoffe,
   (v) 0 bis 80 Gew.-% Additive,
   (vi) 0 bis 25 Gew.-% Fruchtzubereitung,
zur Herstellung eines Cocktail-Desserts.

Die hier genannten Cocktailgeschmacksrichtungen des Desserts sollen nicht limitierend für die noch offenen Kreationsmöglichkeiten an Cocktail-Desserts auf Basis von Sauermilcherzeugnissen wirken. Es ist möglich jede bekannte Cocktail-Geschmackrichtung auf Basis eines Sauermilcherzeugnisses, ausgewählt aus der Gruppe bestehend aus Creme fraîche, Quark, Joghurt, Saure Sahne, Schmand oder Mischungen daraus, durch die Zugabe und Kombination mit den entsprechenden Cocktail-typischen Zutaten zu erzeugen bzw. herzustellen.

Mögliche Cocktailgeschmacksrichtungen werden aus der Kombination der entsprechenden Alhohol(mischungen) und/oder Aromastoffmischungen, welche den Cocktailgeschmack suggestieren und den weiteren dafür typischen Cocktailzutaten mit der Sauermilcherzeugnisbasis hergestellt. Weitere mögliche Cocktailgeschmacksrichtungen sind vorzugsweise ausgewählt aus der Gruppe bestehend aus:

***Champagner-Drinks und sonstige Schaumwein-Cocktails:***
- Champagne Cocktail: Champagner, Zucker, Angosturabitter
- Bellini: Champagner, Zucker, Pfirsich-Fruchtfleisch
- French 75: Champagner, Gin, Zitronensaft, Zuckersirup
- Kir Royal: Champagner, Creme de Cassis
- Mimosa: Champagner, Orangensaft
- Prince of Wales: Champagner, Cognac, Orangenlikör, Benedictine
- Spritz Veneziano: Weißwein oder Prosecco, Bitter-Likör, Sodawasser
- Hugo: Prosecco, Holunderblütensirup, Limette, Sodawasser
- Old Cuban: Rum, Limette, Zuckersirup, Angostura, Minze, Champagner
- Barracuda: Prosecco, Rum, Galliano, Limettensaft, Ananassaft

***Aromatische oder trockene Shortdrinks (Pre-Dinner-Cocktails (Aperitifs)):***
- (Dry) Martini: Gin und Wermut
- Dirty Martini: Variante mit Olivenlake
- Vesper: Gin, Wodka und Lillet
- Pink Gin: Gin, Angosturabitter
- Derby: Gin, Pfirsichbitter, Minzeblätter
- Bijou: Gin, Wermut, Chartreuse
- Tuxedo: Gin, Wermut, Maraschino, Absinth, Orangenbitter
- Bronx: Gin, Wermut, Orangensaft
- Manhattan: Whiskey, Wermut, Angosturabitter
- Rob Roy: Variante mit Scotch Whisky
- Old Fashioned: Spirituose, Zuckersirup, Bitters
- Sazerac: (Rye) Whiskey, Zuckersirup, Peychaud's Bitters
- Kir: Weißwein, Creme de Cassis
- Negroni: Gin, Campari, Wermut
- Americano: Campari, Wermut, Sodawasser

***Süße oder cremige Shortdrinks (auch After-Dinner-Cocktails (Digestifs)):***
- Alexander: Brandy, Kakaolikör, Sahne
- Golden Cadillac: Galliano, Kakaolikör, Sahne
- Golden Dream: Galliano, Orangenlikör, Orangensaft, Sahne
- Grasshopper: Kakaolikör, Pfefferminzlikör, Sahne
- Porto Flip: Portwein, Cognac, Eigelb
- Mary Pickford: Rum, Maraschino, Ananassaft, Grenadine
- Monkey Gland: Gin, Absinth, Orangensaft, Grenadine
- El Presidente: Rum, Orangenlikör, Wermut, Limettensaft, Grenadine
- Black Russian: Wodka, Kaffeelikör
- White Russian: Wodka, Kaffeelikör, Sahne
- Espresso Martini: Wodka, Kaffeelikör, Espresso
- Apple Martini: Wodka, Apfellikör, Orangenlikör
- French Martini: Wodka, Himbeerlikör, Ananassaft
- Paradise: Gin, Apricot Brandy (Aprikosenlikör), Orangensaft
- Angel Face: Gin, Apricot Brandy, Calvados
- Rose: Kirschwasser, Wermut, Erdbeersirup
- Blood and Sand (Cocktail): Whisky, Kirschlikör, Wermut, Orangensaft
- Rusty Nail: Whisky, Drambuie
- God Father: Whisky, Amaretto
- Stinger: Weinbrand, Pfefferminzlikör
- Pousse-Cafes: bunte Spirituosen, Liköre und Sirups
- B52: Kaffeelikör, Rum (wird angezündet)

***Shortdrinks (Sour-Basis)***
- Whiskey Sour: Whiskey, Zitronensaft, Zuckersirup
- Pisco Sour: Pisco, Zitronensaft, Zuckersirup
- Daiquiri: Rum, Limettensaft, Zuckersirup
- Ti Punch: Rhum Agricole, Limettensaft, Zuckersirup
- Hemingway Special, auch: Papa Doble, Hemingway Daiquiri, (Daiquiri) El Floridita: Rum, Limettensaft, Grapefruitsaft, Maraschino
- Weißem oder braunem Cocktail: Rum, Limettensaft, Grenadine
- Gimlet: Gin, Lime Juice Cordial
- Daisy: Spirituose, Zitronensaft, Grenadine
- Jack Rose: Applejack (Apfelbrand), Zitrussaft, Grenadine
- Jack Rabbit: Applejack (Apfelbrand), Zitronensaft, Orangensaft, Ahornsirup
- Margarita: Tequila, Zitronensaft, Orangenlikör
- Tommy's Margarita: Tequila, Limettensaft, Agavensirup
- Sidecar: Weinbrand, Zitronensaft, Orangenlikör
- White Lady: Gin, Zitronensaft, Orangenlikör
- Between the Sheets: Rum, Cognac, Zitronensaft, Orangenlikör
- Blue Moon (Cocktail): Gin, Zitronensaft, Creme de Violette
- Aviation (Cocktail): Gin, Zitronensaft, Maraschino, Creme de Violette
- Casino: Gin, Zitronensaft, Maraschino, Orangenbitter
- Last Word: Gin, Limettensaft, Maraschino, Chartreuse
- Yellow Bird: Rum, Limettensaft, Galliano, Orangenlikör
- Scarlett O'Hara: Southern Comfort, Zitrussaft, Cranberrysaft
- Kamikaze: Wodka, Zitronensaft, Orangenlikör
- Lemon Drop Martini: Zitronenwodka, Limettensaft, Orangenlikör
- Cosmopolitan: Zitronenwodka, Limettensaft, Orangenlikör, Cranberrysaft
- Clover Club: Gin, Zitronensaft, Himbeersirup (oder Grenadine), Eiweiß
- Pink Lady: Gin, Applejack (Apfelbrand), Zitronensaft, Grenadine, Eiweiß

*Longdrinks **auf Sour-Basis***
- Gin Fizz: Gin, Zitronensaft, Zuckersirup, Sodawasser
- Ramos Fizz: Gin Fizz mit Sahne, Eiweiß, Orangenblütenwasser
- Tom Collins: Gin, Zitronensaft, Zuckersirup, Soda
- John Collins: Whiskey, Zitronensaft, Zuckersirup, Sodawasser
- Caipirinha: Cachaça, Limetten, Zucker
- Mojito: Rum, Limettensaft, Zucker, Sodawasser, Minze
- Bramble: Gin, Zitronensaft, Zuckersirup, Brombeerlikör
- Russian Spring Punch: Wodka, Zitronensaft, Zuckersirup, Creme de Cassis

***Highballs und weitere Longdrinks***
- Gin Tonic: Gin, Tonic Water
- Cuba Libre: Rum, Limettensaft, Cola
- Dark'n'Stormy: Rum, Ginger Beer
- Moscow Mule: Wodka, Limettensaft, Ginger Beer
- Horse's Neck: Cognac, Ingwerlimonade, Bitters
- Pimm's No. 1 Cup: Pimm's (Likör), Gurke, (Ingwer)limonade
- Paloma: Tequila, Grapefruitlimonade
- (Lime) Rickey: Spirituose, Limette, Sodawasser
- Campari Orange: Campari, Orangensaft
- Screwdriver: Wodka, Orangensaft
- Harvey Wallbanger: Wodka, Galliano, Orangensaft
- Sea Breeze: Wodka, Cranberrysaft, Grapefruitsaft
- Sex on the Beach: Wodka, Cranberrysaft, Orangensaft, Pfirsichlikör
- Straits Sling: Gin, Kirschlikör, Benedictine, Zitronensaft, Bitters, Sodawasser
- Singapore Sling: Gin, Kirschlikör, Benedictine, Orangenlikör, Limettensaft, Grenadine, Bitters, Ananassaft
- Tequila Sunrise: Tequila, Orangensaft, Zitronensaft, Grenadine
- Long Island Iced Tea: Gin, Rum, Wodka, Tequila, Orangenlikör, Zitronensaft, Cola

***Tropical, Karabik- und Tiki-Drinks***
- Mai Tai: Rum, Orangenlikör, Mandelsirup, Limettensaft, Zuckersirup
- Punsch bzw. (Rum) Punch: Arrak oder Rum, Zucker, Zitrusfrüchte, Wasser oder Tee, Gewürze
- Planter's Punch: Rum, Zitrussaft, Fruchtsäfte, Grenadine
- Zombie: mehrere Rumsorten, Fruchtliköre, Fruchtsäfte
- Hurricane: Rum, Limettensaft, Maracujasirup
- Colada: Drink-Gruppe mit Kokos und Sahne
- Piña Colada: Kokos, Rum, Ananassaft
- Swimming Pool: Rum, Wodka, Kokos, Ananassaft, Sahne, Blue Curaçao (blauer Orangenlikör)
- Painkiller: Rum, Kokos, Ananas- und Orangensaft
- (Rum) Swizzle: Rum, Fruchtsäfte, Falernum (Limetten-Nelken-Likör) oder Sirup
- Sangria: Spirituosen, Wein, Fruchtsaft, Früchte
- Batida: Cachaça, Fruchtsaft

***Würzige Mixgetränke***
- Bloody Mary: Wodka, Tomatensaft, Gewürze
- Red Snapper: Gin, Tomatensaft, Gewürze
- Bull Shot: Wodka, Rinderbrühe, Gewürze
- Vampiro: Tequila, Zitrussäfte, Honig, Chili, Zwiebeln, Gewürze

***Hot Drinks (heiße Mixgetränke)***
- Irish Coffee: Irish Whiskey, Kaffee, Zucker und Sahne
- Brandy Egg Nog: Weinbrand, Zucker, Ei(gelb), Milch
- Tom and Jerry (Cocktail): Weinbrand, Rum, Ei, Zucker, Milch oder Wasser
- Blue Blazer: Whiskey oder Weinbrand, kochendes Wasser, Zucker
- Grog: Rum, Zucker, Wasser
- Hot Buttered Rum: Grog mit Butter und Gewürzen
- Hot Toddy: Spirituose, Zucker, Wasser, Gewürze
- Jagertee: Rum, schwarzer Tee

Der Kreation eines Cocktailgeschmacks für die erfindungsgemäßen Desserts sind keine Grenzen gesetzt. Es ist denkbar, jede Cocktail-Geschmacksrichtung mit der vorliegenden Sauermilcherzeugnisbasis herzustellen und daraus zu kreieren.

In einer weiteren bevorzugten Ausführungsform wird der Cocktailgeschmack durch ein Gemisch vermittelt, welche verkapselt wird, und dann in die Basis des Sauermilcherzeugnisses gemischt und vermischt wird, so dass der Cocktailgeschmack erst beim Verzehr freigesetzt wird, indem der Verbraucher beispielsweise die Kapseln aufbeißt. Vorzugsweise handelt es sich um Kapseln, die eine sichtbare Größe hat. Es können aber auch Kapseln eingesetzt werden, die für den Verbraucher nicht sichtbar sind

Der verkapselte Cocktailgeschmack kann, bei alkoholfreien Cocktail-Desserts, Aromastoffe und entsprechenden Zusätze, die den typischen Cocktailgeschmack vermitteln, sein.

Bei alkoholhaltigen Cocktail-Desserts, können der verkapselte Cocktailgeschmack, neben Aromastoffe und entsprechenden Zusätze, die den typischen Cocktailgeschmack vermitteln, auch die Cocktailtypischen Alkohole sein, die verkapselt vorliegen.

Zu verkapselte Inhaltstoffe und Zusätze, sowie Alkohole werden üblicherweise mit Hilfe von Festen Überzugsmaterialien verkapselt, wie beispielsweise Stärken, einschließlich deren Abbauprodukten sowie chemisch oder physikalisch erzeugten Derivaten (insbesondere Dextrine und Maltodextrine), Gelatine, Gummi Arabicum, Agar-Agar, Ghatti Gum, Gellan Gum, modifizierte und nicht-modifizierte Cellulosen, Pullulan, Curdlan, Carrageenane, Alginsäure, Alginate, Pektin, Inulin, Xanthan Gum und Mischungen von zwei oder mehreren dieser Substanzen. Das feste Verkapselungsmaterial ist vorzugsweise eine Gelatine (insbesondere Schweine-, Rind-, Geflügel- und/oder Fischgelatine), wobei diese vorzugsweise einen Schwellfaktor von größer oder gleich 20, vorzugsweise von größer oder gleich 24 aufweist. Ebenfalls bevorzugt sind Maltodextrine (insbesondere auf Basis von Getreide, speziell Mais, Weizen, Tapioka oder Kartoffeln), die vorzugsweise DE-Werte im Bereich von 10 bis 20 aufweisen. Weiterhin bevorzugt sind Cellulosen (z.B. Celluloseether), Alginate (z.B. Natriumalginat), Carrageenan (z.B. beta-, jota-, lambda- und/oder kappa-Carrageenan), Gummi Arabicum, Curdlan und/oder Agar Agar. Unter diesen Stoffen ist Gelatine besonders bevorzugt, da sie gut verfügbar ist und mit unterschiedlichen Schwellfaktoren bezogen werden kann. Ganz besonders bevorzugt, insbesondere für orale Anwendungen, sind nahtlose Gelatine- oder Alginatkapseln, deren Hülle sich im Mund oder beim Kauen sehr rasch auflöst oder aufbricht. Entsprechende Kapseln werden beispielsweise in den folgenden Schriften ausführlich EP 0389700 A1**,** US 4,251,195**,** US 6,214,376, WO 2003 055587 oder WO 2004 050069 A1**.**

Die Kapseln können alternativ auch Mikrokapseln darstellen. Unter den Begriffen "Mikrokapsel" oder "Nanokapsel" werden vom Fachmann sphärische Aggregate mit einem Durchmesser im Bereich von etwa 0,0001 bis etwa 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon.

Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapsein* (Alginsäure, Agar-Agar), *Induchem Unispheres* (Lactose, mikrokristalline Cellulose, HydroxypropyImethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide).

Chitosanmikrokapseln und Verfahren zu ihrer Herstellung sind aus dem Stand der Technik hinlänglich bekannt [WO 01/01926, WO 01/01927**,** WO 01/01928, WO 01/01929]. Mikrokapseln mit mittleren Durchmessern im Bereich von 0,0001 bis 5, vorzugsweise 0,001 bis 0,5 und insbesondere 0,005 bis 0,1 mm, bestehend aus einer Hüllmembran und einer die Wirkstoffe enthaltenden Matrix, können beispielsweise erhalten werden, indem man
- aus Gelbildnern, kationischen Polymeren und Wirkstoffen eine Matrix zubereitet,
- gegebenenfalls die Matrix in einer Ölphase dispergiert,
- die dispergierte Matrix mit wässrigen Lösungen anionischer Polymere behandelt und gegebenenfalls dabei die Ölphase entfernt.

Die Schritte (a) und (c) sind dabei insofern austauschbar, als man anstelle der kationischen Polymeren in Schritt (a) anionische Polymere einsetzt und umgekehrt.

Man kann die Kapseln auch erzeugen, indem man die zu verkapselten Stoffe abwechselnd mit Schichten aus unterschiedlich geladenen Polyelektrolyten einhüllt (layer-bylayer-Technologie). In diesem Zusammenhang sei auf das Europäische Patent EP 1064088 B1 (Max-Planck Gesellschaft) verwiesen.

In einer bevorzugten Ausführungsform umfasst das erfindungsgemäße Cocktail-Dessert zusätzliche Inhaltstoffe ausgewählt aus Süßstoffe, Lebensmittelsäure, Verdickungsmittel, Reduktionsmittel, Aromastoffe, Vitamine, Prebiotische Stoffe, Probiotische Stoffe, Geschmacksverstärker, Wirkstoffe zur Maskierung von unangenehmen Geschmackseindrücken, Antioxidantien, Milcheiweißkonzentrate, Lebensmittelfarbstoffe, Lebensmittelpartikel, wie (brauner Rohr-) Zucker und/oder Kokos(raspeln), (gefrier-) getrocknete Früchte, Schokostücke usw. und Gemischen davon.

In einer bevorzugten Ausführungsform ist das erfindungsgemäße Dessert, welches bevorzugt ein Cocktail-Dessert ist, löffelfähig, d.h. löffelbar, so dass es kein Getränk oder trinkbares Produkt darstellt.

Ein weiterer Gegenstand der vorliegenden Erfindung ist ein Verfahren zur Herstellung eines erfindungsgemäßen Cocktail-Dessert, wobei eine Sauermilchbasis ausgewählt aus Creme fraîche, Quark, Joghurt, Sahne, Schmand oder Mischungen daraus bereitgestellt wird, und weitere Zutaten ausgewählt aus
(a) 0,001 bis 5,0 Gew.-% Stabilisatoren,
(b) 0 bis 25 Gew.-% Zucker und/oder Zuckeraustauschstoffe und/oder Süßstoffe,
(c) 0 bis 5,0 Gew.-% Alkohol,
(d) 0,1 bis 20 Gew.-% Aromastoffe,
(e) 0 bis 80 Gew.-% weitere Additive,
(f) 0 bis 25 Gew.-% Fruchtzubereitung, zugemischt werden,
mit der Maßgabe, dass die Komponenten a) bis f) sich zu 100 Gew.-% zusammen addieren.

Ein weiterer Aspekt der vorliegenden Erfindung ist die Verwendung einer Sauermilchbasis ausgewählt aus Creme fraîche, Quark, Joghurt, Sahne, Schmand oder Mischungen daraus in denen weitere Zutaten ausgewählt aus
(a) 0,001 bis 5,0 Gew.-% Stabilisatoren,
(b) 0 bis 25 Gew.-% Zucker und / oder Zuckeraustauschstoffe und / oder Süßstoffe,
(c) 0 bis 5,0 Gew.-% Alkohol,
(d) 0,1 bis 20 Gew.-% Aromastoffe,
(e) 0 bis 80 Gew.-% Additive,
(f) 0 bis 25 Gew.-% Fruchtzubereitung, zugemischt werden,
zur Herstellung eines Cocktail-Desserts, welche beim Verbraucher beim Verzehr einen Cocktailgeschmack vermittelt.

### HERSTELLUNG VON MAGERMILCH

Zur Herstellung der Magermilch für die Sauermilchbasis findet zunächst eine Abtrennung von festen Nichtmilchbestandteilen sowie die Entrahmung des Fettanteils von etwa 4 Gew.-% aus der Rohmilch statt. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können.¹ Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.
¹(http://www.westfalia-separator.com/de/anwendungen/molkereitechnik/milch-molke.html).

Die Wärmebehandlung der Milch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Milch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

### HERSTELLUNG VON SAUERMILCHERZEUGNISSEN

### Joghurt

Joghurt besteht vereinfacht aus Milch, Milchsäure und auch Bakterien. Die Milch kann von Kühen, aber auch von anderen Milch gebenden Tieren, wie beispielsweise Schafe, Ziegen, Pferde und Kamele gewonnen werden.

Bevorzugt wird Standardmilch oder Magermilch (wie oben beschrieben) zur weiteren Her-stellung des Joghurts verwendet werden. Der Milch werden Bakterienkulturen zugesetzt. Die Bakterienkulturen bauen den Milchzucker Laktose zu Milchsäure ab, wodurch das Milchei-weiß gerinnt. Diese sogenannte Fermentation führt nicht nur zur mehr oder weniger festen Konsistenz sowie dem Joghurt-typischen Geruch und Geschmack, sondern auch zu einer deutlich längeren Haltbarkeit. Bei der modernen Herstellung kommt im Unterschied zu frü-her stets wärmebehandelte Milch mit eingestelltem Fettgehalt zum Einsatz. Indem die Her-steller außerdem die Art und Zusammensetzung der eingesetzten Milchsäurekulturen nicht einfach dem Zufall überlassen, nehmen sie schon im Vorfeld gezielt Einfluss auf die Struktur und das Aroma. Vorzugsweise werden thermophile Bakterienkulturen eingesetzt, die eine Temperatur von ca. 38 bis 42 Grad bevorzugen und welche überwiegend ausgewählt sind aus Spezies Streptococcus thermophilus und Lacotobacillus (delbrueckii subsp. bulgaricus), Bifidobacteri-um bifidum für milde Joghurtsorten mit einem geringeren Milchsäuregehalt. Ebenfalls im Hinblick auf gute Konsistenz werden sehr oft noch Magermilchpulver zugesetzt oder durch Eindampfen den Wassergehalt d er Ausgangsmilch reduziert. Die generell erforderliche Erhitzung der Milch dient ebenfalls nicht nur dem Schutz vor schädlichen Mikroorganismen, sondern gleichfalls dem Aufbau der Joghurtgels.

Es kann zwischen stichfesten oder gerührten Joghurt unterschieden werden. Für gerührten oder sämigen Joghurt wird die Milch nach Zugabe der Joghurtkulturen mehrere Stunden in großen Stahltanks fermentiert. Am besten arbeiten thermophile Bakterien im Temperaturbereich von 38 bis 42 °C. Durch die sich bildende Milchsäure gerinnen die Caseine (bestimmte Fraktionen des Milcheiweißes) langsam zu einem gallertartigen Netzwerk, in das die flüssige Molke eingeschlossen ist. Sobald ein bestimmter pH-Wert (Säurewert) erreicht ist, wird der Joghurt glattgerührt, auf Kühlschranktemperatur abgekühlt, abgefüllt und sofort verschlossen. Da die Viskosität nach dem Verpacken zunimmt, kann das verkaufsfertige Produkt ähnlich wie stichfester Joghurt aussehen. Diese zweite Variante wird jedoch so hergestellt, dass die Milch-Kulturenmischung gleich in Joghurtbecher abgefüllt wird, d.h. der Fermentationsprozess findet noch vor der Kühlung statt. Während die Mischung im Becher gerinnt, darf wieder keine Bewegung die Gallertbildung stören. Auch bei stichfestem Joghurt stoppt dann nach Erreichen des gewünschten pH-Wertes ein rasches Abkühlen die Fermentation. Zum Schluss kommen die Becher in eine Kältekammer, wo der Joghurt dann endgültig fest wird.

### Dickmilch

Dickmilch, Sauermilch, Setzmilch oder Stockmilch ist ein aus Kuhmilch gewonnenes Milchprodukt. Es entsteht heute vor allem aus pasteurisierter - früher aus ungekochter-und homogenisierter Kuhmilch durch bakterielle Milchsäurebildung aus dem Milchzucker. Die Folge ist das Ausflocken des Caseins, was die Milch dann "dick" macht. Im Unterschied zu Joghurt (thermophile Kulturen, Temperaturoptimum 42-45 °C) werden bei der Herstellung von Dickmilch mesophile (Temperaturoptimum 22-28 °C) Kulturen beigefügt.

### Creme fraîche

Creme fraîche wird aus Sahne hergestellt, der Milchsäurebakterien zugesetzt werden. Die Milchsäurebakterien setzen dabei vorzugsweise bei einer Temperatur von 20 bis 40 °C den Milchzucker in Milchsäure um. Dadurch erhält die Creme fraîche ihren besonderen Geschmack und ihre Konsistenz. Vorzugsweise weist Creme fraîche einen Fettgehalt von ca. 30% auf.

### Saure Sahne

Saure Sahne oder Sauerrahm (creme aigre, auch creme acidulée) ist Sahne, die mit Milchsäurebakterien versetzt wurde, wodurch sie neben einem leicht säuerlichen Geschmack eine festere, cremige Konsistenz annimmt. Gehandelt wird saure Sahne in verschiedenen Varianten unter diesen Namen:
- Saure Sahne, Sauerrahm enthält mindestens 10 % Fett.
- Creme légère ist eine fettärmere Variante der Creme fraîche mit einem Fettgehalt von meist um die 20 %.
- Schmand ist eine fetthaltigere saure Sahne mit einem Fettgehalt von meist 20-29 %. Ein Zusatz von Bindemitteln (meist Stärke) ist erlaubt.
- Creme fraîche (creme fraîche épaisse) enthält mindestens 30 % Fett, ein Zusatz von bis zu 15 % Saccharose ist erlaubt. Creme fraîche darf nach der Fermentation nicht mehr wärmebehandelt werden.

### Schmand

Schmand wird durch Fermentation von Sahne nach Zugabe verschiedener mesophiler Milchsäurebakterien *(Lactococcus lactis, Lactococcus lactis subsp. cremoris, Ln. cremoris und Lc. diacethylactis)* -Kulturen hergestellt. Die Bakterien erzeugen dabei Milchsäure, die wiederum die Sahne sauer macht und gleichzeitig verdickt. Schmand enthält vorzugsweise 20 - 29% Fett.

### Quark

Beim Quark handelt es sich um einen Frischkäse, auch als Weißkäse bekannt. Quark besteht zu ca. 80 % aus Wasser. Quark wird für gewöhnlich aus entrahmter Milch hergestellt. In Deutschland darf Frischkäse nicht aus Rohmilch, sondern nur aus pasteurisierte Mich hergestellt werden.

Quark ist ein Sauermilchkäse, da die Gerinnung der Milch durch Milchsäurebakterien (oder auch Säure, z.B. Zitronensäure oder Essigsäure), und nicht wie bei Süßmilchkäse durch Lab, erfolgt. Hierbei werden der pasteurisierten Magermilch Milchsäurebakterien zugesetzt, die einen Teil der Lactose in Milchsäure umwandelt, so dass der pH-Wert der Milch abnimmt. Wird ein bestimmter pH-Wert unterschritten, so fällt das Kasein aus. In der Regel wird die Dicklegung in einem Temperaturbereich von 21 bis 35°C durchgeführt. Quark ist sehr eiweißhaltig und enthält zwischen 10 und 20 Prozent Eiweiß, wovon 80 Prozent Kasein und 20 Prozent Molkenproteine sind. Darüber hinaus sind in Quark Calcium und Phosphat enthalten. Im Sinne der vorliegenden Erfindung ist Quark mit einer Fettstufe von unter 10 bis 85 Gew.-% einsatzfähig.

### NAHRUNGSMITTELHILFS- UND ZUSATZSTOFFE

In einer weiteren Ausführungsform der vorliegenden Erfindung ist vorgesehen, dass die Nahrungsmittel weitere Hilfs- und Zusatzstoffe, wie zum Beispiel Starterkulturen, Probiotische Mikroorganismen, Prebiotische Stoffe, Emulgatoren, Verdickungsmittel, Süßstoffe, Lebensmittelsäuren, Säureregulatoren, Vitamine, Antioxidantien, Aromastoffe, Geschmacksverstärker, Lebensmittelfarbstoffe und dergleichen in Mengen von beispielsweise etwa 0,1 bis etwa 10 Gew.-%, vorzugsweise etwa 0,5 bis etwa 8 Gew.-%, insbesondere etwa 1 bis etwa 5 Gew.-% und besonders bevorzugt etwa 2 bis etwa 3 Gew.-% enthalten können.

### Starterkulturen und Probiotische Mikroorganismen

Probiotische Mikroorganismen, auch als "Probiotics" bezeichnet, die die Gruppe (N) bilden, stellen lebende Mikroorganismen dar, die für den Wirt nützliche Eigenschaften besitzen. Gemäß der Definition der FAO/WHO handelt es sich um "lebende Mikroorganismen, die bei angemessener Dosierung dem Wirt einen Gesundheitsvorteil vermitteln". Milchsäurebakterien (LAB) und Bifidobakterien stellen die bekanntesten Probiotics dar; es können aber auch verschiedene Hefen und Bazillen Verwendung finden. Probiotics werden üblicherweise als Bestandteil von fermentierten Nahrungsmitteln aufgenommen, denen man spezielle Lebendkulturen zugesetzt hat, wie z.B. Joghurt, Sojajoghurt oder andere probiotische Nahrungsmittel. Darüber hinaus sind auch Tabletten, kapseln, Pulver und Sachets erhältlich, die die Mikroorganismen in gefriergetrockneter Form enthalten. Tabelle B gibt einen Überblick über handelsübliche Probiotics und den zugehörigen Auslobungen zur Gesundheit, die im Sinne der vorliegenden Erfindung als Komponente (b1) eingesetzt werden können.

**Tabelle A:**

| Probiotische Stoffe | | | |
|---|---|---|---|
| **Stamm** | **Bereichnung** | **Hersteller** | **Auslobung** |
| *Bacillus coagulans* GBI-30,6086 | GanedenBC | Ganeden Biotech | Steigert die Immunantwort bei viraler Infektion |
| *Bifidobacterium animal-is* subsp. *lactis* BB-12 | Probio-Tec Bifidobacterium BB-12 | Chr. Hansen | Klinische Studien am Menschen haben gezeigt, dass BB-12 alleine oder in Kombination das gastrotestinale System positiv beeinflusst. |
| *Bifidobacterium infantis* 35624 | Align | Procter & Gamble | In einer vorläufigen Studie wurde gezeigt, dass das Bakterium abdominale Schmerzen verringern kann. |
| *Lactobacillus acidophilus* NCFM | | Danisco | Aus einer Studie geht hervor, dass die Nebeneffekte von antibiotischen Behandlungen verringert werden |
| *Lactobacillus paracasei* St11 (or NCC2461) | | | |
| *Lactobacillus johnsonii* La1 (= Lactobacillus LC1, *Lactobacillus johnsonii* NCC533) | | Nestlé | Verringert Gastritisbeschwerden und vemindert Entzündungen |
| *Lactobacillus plantarum* 299v | GoodBelly/ Pro-Viva/ProbiMage | Probi | Könnte IBS Symptome verbessern; jedoch noch mehr Studien erforderlich. |
| *Lactobacillus reuteri* American Type Culture Collection \| ATTC 55730 *(Lactobacillus reuteri* SD2112) | | BioGaia | Erste Anzeichen für eine Wirksamkeit gegen Gangivitis, Fieber bei Kindern und Verminderung der Krankheitstage bei Erwachsenen. |
| *Lactobacillus reuteri* Protectis (DSM 17938, daughter strain of ATCC 55730) | | | |
| *Lactobacillus reuteri* Protectis (DSM 17938, daughter strain of ATCC 55730) | | | |
| *Saccharomyces boulardii* | DiarSafe and others | Wren Laboratories | Beschränkter Nachweis bei der Behandlung von akuten Durchfallerkrankungen. |
| *Lactobacillus rhamnosus* GR-1 & *Lactobacillus reuteri* RC-14 | Bion Flore Intime/ Jarrow Fem-Dophilus | Chr. Hansen | In einer Studie Nachweis der Wirksamkeit gegen Vaginitis. |
| *Lactobacillus acidophilus* NCFM *& Bifidobacterium bifidum* BB-12 | Florajen3 | American Lifeline, Inc | Erste Hinweise auf Wirksamkeit gegen CDAD |
| *Lactobacillus acidophilus* CL1285 *& Lactobacillus casei* LBC80R | Bio-K+ CL1285 | Bio-K+ International | Hinweise auf Verbesserung bei der Verdauung, speziell im Hinblick auf Lactoseintoleranz. |
| *Lactobacillus plantarum* HEAL 9 *& Lactobacillus paracasei* 8700:2 | Bravo Friscus/ ProbiFrisk | Probi | Derzeit laufen Untersuchungen zur Wirksamkeit gegen Erkältungs-erkrankungen. |

Im Folgenden werden zwei weiteren Formen von Milchsäurebakterien genannt, die ebenfalls als Starterkulturen bzw. als Probiotics eingesetzt werden können:
- *Lactobacillus bulgaricus;*
- *Streptococcus thermophilus;*
- *Streptococcus thermophilus,*
- *Leuconostoc species,*
- *Lactococcus lactis subsp. lactis biovar diacetylactis,*
- *Lactococcus lactis subsp. lactis,*
- *Lactococcus lactis subsp. cremoris,* und
- *Bifido bakterium lactis B12,*

### Prebiotische Stoffe

In einer weiteren Ausgestaltung der Erfindung können die Zubereitungen des Weiteren Prebiotische Stoffe ("Prebiotics") enthalten, die die Gruppe H bilden. Prebiotics werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate, die als Prebiotics im Sinne der Erfindung besonders bevorzugt sind.

**Fructooligosaccharide.** Fructooligosaccharide oder abgekürzt FOS umfassen insbesondere kurzkettige Vertreter mit 3 bis 5 Kohlenstoffatomen, wie beispielsweise D-Fructose und D-Glucose. FOS, auch als Neozucker bezeichnet, werden kommerziell auf Basis von Saccharose und dem aus Pilzen gewonnenen Enzym Fructosyltransferase hergestellt. FOS unterstützen insbesondere das Wachstum von Bifidobakterien im Darm und werden vor allem in den USA zusammen mit probiotischen Bakterien in verschiedenen funktionalisierten Lebensmitteln vermarktet.

**Inuline.** Inuline zählen zu einer Gruppe von natürlich vorkommenden Fructose enthaltenden Oligosachhariden. Sie gehören zu einer Klasse von Kohlenhydraten, die als Fructane bezeichnet werden. Ihre Gewinnung erfolgt aus den Wurzeln der Chicoree-Pflanze (Cichorium intybus) oder so genannten Jerusalem-Artischocken. Inuline bestehen überwiegend aus Fructoseeinheiten und weisen typisch eine Glucoseeinheit als Endgruppe auf. Die Fructoseeinheiten sind dabei miteinander über eine beta-(2-1)glykosidische Bindung verknüpft. Der mittlere Polymerisationsgrad von Inulinen, die als Prebiotics im nahrungsmittelbereich Anwendung finden, liegt bei 10 bis 12. Inuline stimulieren ebenfalls das Wachstum von Bifidobakterien im Dickdarm.

**Isomaltooligosaccharide.** Bei dieser Gruppe handelt es sich um eine Mischung von alpha-D-verknüpften Glucoseoligomeren, einschließlich Isomaltose, Panose, isomaltotetraose, Isomaltopentaose, Nigerose, Kojibiose, Isopanose und höherer verzweigter Oligosaccharide. Isomaltooligosaccharide werden über verschiedene enzymatische Wege hergestellt. Sie stimulieren ebenfalls das Wachstum von Bifidobakterien und Lactobacillen im Dickdarm. Isomaltooligosaccharide werden speziell in Japan als Nahrungsmittelzusatzstoffe in funktionalisierten Lebensmitteln eingesetzt. Inzwischen finden sie auch in den USA Verbreitung.

**Lactilol.** Lactilol ist das Disaccharid der Lactulose. Seine medizinische Anwendung findet gegen Verstopfung und bei häpatischer Enzephalopathie. In Japan wird Lactilol als prebiotic eingesetzt. Es widersteht dem Abbau im oberen Verdauungstrakt, wird aber durch verschiedene Darmbakterien fermentiert, was zu einem Anstieg der Biomasse an Bifidobakterien und Lactobacillen im Darm führt. Lactilol ist auch unter der chemischen Bezeichnung 4-0-(beta-D-galactopyranosyl)-D-glucitol bekannt. Der medizinsche Anwendungsbereich von Lactilol in den USA ist wegen fehlender Studien beschränkt; in Europa wird es vorzugsweise als Süßstoff eingesetzt.

**Lactosucrose.** Lactosucrose ist ein Trisaccharid, das sich aus D-Galactose, D-Glucose und D-Fructose aufbaut. Lactosucrose wird durch enzymatischen Transfer des Galactosylrestes in der Lactose auf die Sucrose hergestellt. Es wird weder im Magen noch im oberen Teil des Darmtraktes abgebaut und wird ausschließlich von Bifidobakterien zu Wachstum konsumiert. Unter physiologischen Gesichtspunkten wirkt Lactosucrose als Stimulator für das Wachstum der Darmflora. Lactosucrose ist ebenfalls bekannt als 4G-beta-D-galactosucrose. Es ist in Japan als Nahrungsmittelzusatzstoff und als Bestandteil von funktionalisierten lebensmittel weit verbreitet, insbesondere auch als Zusatzstoff für Joghurts. Lactosucrose wird derzeit auch in den USA für einen ähnlichen Anwendungszweck getestet.

**Lactulose.** Lactulose ist ein halbsynthetisches Disaccharid aus D-Lactose und D-Fructose. Die Zucker sind über eine beta-glykosidische Bindung verknüpft, was sie resistent gegen Hydrolyse durch Verdauungsenzyme macht. Stattdessen wird Lactulose durch eine beschränkte Anzahl von Darmbakterien fermentiert, was zu einem Wachstum insbesondere von Lactobacillen und Bifidobakterien führt. Lactulose stellt in den USA ein verschreibungspflichtiges Medikament gegen Verstopfung und hepatische Enzephalopathie dar. In Japan hingegen wird es als Nahrungsmittelzusatzstoff und Bestandteil von funktionalisierten Lebensmitteln frei verkauft.

**Pyrodextrine.** Pyrodextrine umfassen eine Mischung von glucoseenthaltenden Oligosacchariden, die bei der Hydrolyse von Stärke gebildet werden. Pyrodextrine fördern die Proliferation von Bifidobakterien im Dickdarm. Auch sie werden im oberen Darmbereich nicht abgebaut.

**Sojaoligosaccharide.** Bei dieser Gruppe handelt es sich um Oligosaccharide, die im Wesentlichen nur in Sojabohnen und darüber noch in anderen Bohnen sowie Erbsen zu finden sind. Die beiden maßgeblichen Vertreter sind das Trisaccharid Raffinose und das Tetrasaccharid Stachyose. Raffinose setzt sich aus jeweils einem Molekül D-Galactose, D-Glucose und D-Fructose zusammen. Stachyose besteht aus zwei Molekülen D-Galactose sowie jeweils einem Molekül D-Glucose und D-Fructose. Sojaoligosacccharide stimulieren das Wachstum von Bifidobakterien im Dickdarm und werden in Japan bereits als Nahrungsmittelzusatzstoffe sowie in funktionalisierten Lebensmitteln eingesetzt. In den USA werden sie für diese Anwendung derzeit getestet.

**Transgalactooligosaccharide.** Transgalactooligosaccharide (TOS) stellen Mischungen von Oligosacchariden auf Basis D-Glucose und D-Galactose dar. TOS werden ausgehend von D-Lactose mit Hilfe des Enzyms Betaglucosidase aus Aspergillus oryzae hergestellt. Wie viele andere Prebiotics sind auch TOS im Dünndarm stabil und stimulieren das Wachstum von Bifidobakterien im Dickdarm. TOS werden sowohl bereits in Europa als auch in Japan als Nahrungsmittelzusatzstoffe vermarktet.

**Xylooligosaccharide.** Xylooligosaccharide enthalten beta-1,4-verknüpfte Xyloseeinheiten. Der Polymerisationsgrad der Xylooligosaccharide liegt zwischen 2 und 4. Sie werden durch enzymatische Hydrolyse des Polysaccharids Xylan erhalten. Sie werden bereits in Japan als Nahrungsmittelzusatzstoffe vermarktet, in den USA befinden sie sich noch in der Testphase.

**Biopolymere.** Geeignete Biopolymere, die ebenfalls als Prebiotics in Betracht kommen, wie beispielsweise Beta-Glucane, zeichnen sich dadurch aus, dass sie auf pflanzlicher Basis hergestellt werden, beispielsweise kommen als Rohstoffquellen Cerealien wie Hafer und Gerste, aber auch Pilze, Hefen und Bakterien in Frage. Außerdem geeignet sind mikrobiell hergestellte Zellwandsuspensionen oder ganze Zellen mit hohem Beta-Glucan Gehalt. Restliche Anteile an Monomeren weisen 1-3 und 1-4 oder 1-3 und 1-6 Verknüpfungen auf, wobei der Gehalt stark variieren kann. Vorzugsweise werden Beta-Glucane auf Basis von Hefen, insbesondere Saccharomyces, speziell Saccharomyces cerevisiae, erhalten. Andere geeignete Biopolymere sind Chitin und Chitinderivate, insbesondere Oligoglucosamin und Chitosan, das ein typisches Hydrokolloid darstellt.

**Galactooligosaccharide (GOS).** Galacto-Oligosaccharide werden durch die enzymatische Umwandlung von Lactose, einer Komponente von Rindermilch, erzeugt. GOS umfassen im Allgemeinen eine Kette von Galactose-Einheiten, die durch aufeinanderfolgende Transgalactosylierung-Reaktionen gebildet werden, und die eine terminale Glucoseeinheit aufweisen. Terminale Glucoseeinheiten werden zumeist durch eine frühzeitige Hydrolyse von GOS gebildet. Der Polymerisationsgrad der GOS kann ziemlich stark schwanken und reicht von 2 bis 8 Monomereinheiten. Eine Reihe von Faktoren bestimmt dabei den Aufbau und die Reihenfolge Monomereinheiten: die Enzym-Quelle, das Ausgangsmaterial (Lactose-Konzentration und Ursprung der Lactose), die am Prozess beteiligten Enzyme, Bedingungen bei der Verarbeitung und die Zusammensetzung des Mediums.

### Emulgatoren

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen.

Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

### Verdickungsmittel

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
- E 400 -: Alginsäure
- E 401 -: Natriumalginat
- E 402 -: Kaliumalginat
- E 403 -: Ammoniumalginat
- E 404 -: Calciumalginat
- E 405 -: Propylenglycolalginat
- E 406 -: Agar Agar
- E 407 -: Carrgeen, Furcelleran
- E 407 -: Johannisbrotkernmehl
- E 412 -: Guarkernmehl
- E 413 -: Traganth
- E 414 -: Gummi arabicum
- E 415 -: Xanthan
- E 416 -: Karaya (Indischer Traganth)
- E 417 -: Tarakernmehl (Peruanisches Johannisbrotkernmehl)
- E 418 -: Gellan
- E 440 -: Pektin, Opekta
- E 440ii -: Amidiertes Pektin
- E 460 -: Mikrokristalline Cellulose, Cellulosepulver
- E 461 -: Methylcellulose
- E 462 -: Ethylcellulose
- E 463 -: Hydroxypropylcellulose
- E 465 -: Methylethylcellulose
- E 466 -: Carboxymethylcellulose, Natriumcarboxymethylcellulose

### Süßstoffe

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

### In Betracht kommen auch

synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

### Lebensmittelsäuren

Die Nahrungsmittel können Carbonsäuren enthalten. Säuren im Sinne der Erfindung sind bevorzugt in Lebensmitteln zulässige Säuren, insbesondere die hier genannten:
- E 260: - Essigsäure
- E 270: - Milchsäure
- E 290: - Kohlendioxid
- E 296: - Apfelsäure
- E 297: - Fumarsäure
- E 330: - Citronensäure
- E 331: - Natriumcitrat
- E 332: - Kaliumcitrat
- E 333: - Calciumcitrat
- E 334: - Weinsäure
- E 335: - Natriumtartrat
- E 336: - Kaliumtartrat
- E 337: - Natrium-Kaliumtartrat
- E 338: - Phosphorsäure
- E 353: - Metaweinsäure
- E 354: - Calciumtartrat
- E 355: - Adipinsäure
- E 363: - Bernsteinsäure
- E 380: - Triammoniumcitrat
- E 513: - Schwefelsäure
- E 574: - Gluconsäure
- E 575: - Glucono-delta-Lacton

### Säureregulatoren

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:
- E 170: - Calciumcarbonat
- E 260-263: - Essigsäure und Acetate
- E 270: - Milchsäure
- E 296: - Äpfelsäure
- E 297: - Fumarsäure
- E 325-327: - Lactate (Milchsäure)
- E 330-333: - Citronensäure und Citrate
- E 334-337: - Weinsäure und Tartrate
- E 339-341: - Orthophosphate
- E 350-352: - Malate (Äpfelsäure)
- E 450-452: - Di-, Tri- und Polyphosphate
- E 500-504: - Carbonate (Kohlensäure)
- E 507: - Salzsäure und ChlorideE 513-517Schwefelsäure und Sulfate
- E 524-528: - Hydroxide
- E 529-530: - Oxide
- E 355-357: - Adipinsäure und Adipate
- E 574-578: - Gluconsäure und Gluconate

### Vitamine

In einer weiteren Ausführungsform der vorliegenden Erfindung können die Nahrungsmittelzusatzstoffe als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).
Die bevorzugten Vitamine sind neben der Ascorbinsäure die Gruppe der Tocopherole.

### Antioxidantien

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propylgallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

### Aromastoffe

Die Erfindung erlaubt insbesondere auch den Einsatz von Aromastoffen mit Ester-, Aldehyd- oder Lactonstruktur, die in Gegenwart von Titandioxid und unter Lichteinfluss besonders schnell abgebaut werden. Die Erfindung sorgt somit auch für eine verbesserte Stabilität, speziell Lagerstabilität der Aromastoffe.

Die erfindungsgemäßen oralen Zubereitungen können einen oder mehrere Aromastoffe enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Geschmacksverstärker

Diese Zubereitungen- wie auch die Aromamischungen- können des Weiteren zusätzliche Aromastoffe zum Verstärken eines salzigen, gegebenenfalls leicht sauren und/oder Umami-Geschmackseindrucks enthalten. Es werden somit die erfindungsgemäßen Produkte bzw. Aromamischungen in Kombination mit zumindest einer weiteren zur Verstärkung eines an-genehmen Geschmackseindrucks (salzig, Umami, gegebenenfalls leicht sauer) geeigneten Substanz verwendet. Hierbei bevorzugt sind salzig schmeckende Verbindungen und salzverstärkende Verbindungen. Bevorzugte Verbindungen sind in der WO 2007/045566 offenbart. Ferner bevorzugt sind Umami-Verbindungen wie in der WO 2008/046895 und EP 1 989 944 beschrieben sind.

Weiterhin können erfindungsgemäß bevorzugte Aromamischungen und Produkte auch Aromastoffe zur Maskierung von bitteren und/oder adstringierenden Geschmackseindrücken umfassen (Geschmackskorrigentien). Die (weiteren) Geschmackskorrigenzien werden z. B. aus der folgenden Liste ausgewählt: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-N-2-(4-hydroxy-3-methoxyphenyl)-ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine z.B. gemäß WO 2006/106023 (z.B. 2-(4-Hydroxy-3-methoxyphenyl)-1-(2,4,6-tri¬hydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxy-phenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen gemäß PCT/EP 2006/067120 Diacetyltrimere gemäß WO 2006/058893, Gemische von Molkeproteinen mit Lecithinen und/oder bittermaskierende Substanzen wie Gingerdione gemäß WO 2007/003527.

Bevorzugte Aromastoffe sind solche, die einen süßen Geruchseindruck verursachen, wobei der oder die weiteren Aromastoffe, die einen süßen Geruchseindruck verursachen, bevorzugt ausgewählt sind aus der Gruppe bestehend aus:

Vanillin, Ethylvanillin, Ethylvanillinisobutyrat (= 3 Ethoxy-4-isobutyryloxybenzaldehyd), Furaneol (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalac-ton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäurei-soamylester, 3-Methyl-buttersäureethylester, n-Hexansäureethylester, n-Hexansäure-allylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, 4-Hydroxyzimtsäure, 4-Methoxy-3-hydroxyzimtsäure, 3-Methoxy-4-hydroxyzimtsäure, 2-Hydroxyzimtsäure, 2,4-Dihydroxybenzoesäure, 3-Hydroxybenzoesäure, 3,4-Dihydroxybenzoesäure, Vanillinsäure, Homovanillinsäure, Vanillomandelsäure und Phenylacetaldehyd.

### Wirkstoffe zur Maskierung von unangenehmen Geschmackseindrücken

Weiterhin können die oralen Zubereitungen auch weitere Stoffe umfassen, die ebenfalls zur Maskierung von bitteren und/oder adstringierenden Geschmackseindrücken dienen. Diese weiteren Geschmackskorrigenzien werden z. B. aus der folgenden Liste ausgewählt: Nucleotiden (z.B. Adenosin-5'-monophosphat, Cytidin-5'-monophosphat) oder deren physiologisch akzeptablen Salzen, Lactisolen, Natriumsalzen (z.B. Natriumchlorid, Natriumlactat, Natriumcitrat, Natriumacetat, Natriumgluconoat), Hydroxyflavanonen, dabei bevorzugt Eriodictyol, Sterubin (Eriodictyol-7-methylether), Homoeriodictyol, und deren Natrium-, Kalium-, Calcium-, Magnesium- oder Zinksalzen (insbesondere solche wie beschrieben in EP 1258200 A2, die bezüglich der darin offenbarten entsprechenden Verbindungen auf dem Wege der Verweisung Bestandteil dieser Anmeldung wird), Hydroxybenzoesäureamiden, dabei vorzugsweise 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-*N*-(4-hydroxy-3-methoxybenzyl)amid, 2-Hydroxy-benzoesäure-*N*-4-(hydroxy-3-methoxybenzyl)amid, 4-Hydroxybenzoesäure-*N*-(4-hydroxy-3-methoxybenzyl)amid, 2,4-Dihydroxybenzoesäure-*N*-(4-hydroxy-3-methoxy-benzyl)amid-Mono-natriumsalz, 2,4-Dihydroxybenzoesäure-*N*-2-(4-hydroxy-3-methoxy-phenyl)ethylamid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-N-[2-(4-hydroxy-3-methoxyphenyl)ethyl]amid; 4-Hydroxybenzoesäurevanillylamiden (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoinen, dabei vorzugsweise 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)-ethanon und 1-(2-Hydroxy-4-methoxyphenyl)-2-(4-hydroxy-3-methoxyphenyl)ethanon) (insbesondere solche wie beschrieben in WO 2006/106023 beschrieben, die bezüglich der darin offenbarten entsprechenden Verbindungen auf dem Wege der Verweisung Bestandteil dieser Anmeldung wird); Hydroxyphenylalkandionen, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimeren (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird); Divanillinen (insbesondere solche wie beschrieben in WO 2004/078302, die bezüglich der darin offenbarten entsprechenden Verbindungen auf dem Wege der Verweisung Bestandteil dieser Anmeldung wird) und 4-Hydroxydihydrochalconen (vorzugsweise wie beschrieben in US 2008/0227867 A1, die bezüglich der darin offenbarten entsprechenden Verbindungen auf dem Wege der Verweisung Bestandteil dieser Anmeldung wird), dabei insbesondere Phloretin und Davidigenin, Aminosäuren oder Gemische von Molkeproteinen mit Lecithinen, Hesperetin wie in der WO 2007/014879 offenbart, die hinsichtlich dieser Verbindungen auf dem Wege der Verweisung Bestandteil dieser Anmeldung wird, 4-Hydroxydihydrochalkonen wie in der WO 2007/107596 offenbart, die hinsichtlich dieser Verbindungen auf dem Wege der Verweisung Bestandteil dieser Anmeldung wird, oder Propenylphenylglycosiden (Chavicolglycosiden) wie in EP 1955601 A1 beschrieben, die hinsichtlich dieser Verbindungen auf dem Wege der Verweisung Bestandteil dieser Anmeldung wird, oder Extrakten aus *Rubus suavissimus,* Extrakte aus *Hydrangea macrophylla* wie in EP 2298084 A1 beschrieben, Pellitorin und abgeleiteten Aromakompositionen wie in EP 2008530 A1 beschrieben, Umami-Verbindungen wie in WO 2008/046895 A1 und EP 1989944 A1 beschrieben, Umami-Verbindungen wie beschrieben in EP 2064959 A1 bzw. EP 2135516 A1, Vanillyllignanen, Enterodiol, sowie N-Decadienoylaminosäuren und deren Gemische.

### Lebensmittelfarbstoffe

Lebensmittelfarbstoffe oder kurz Farbstoffe sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentische Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

### BEISPIELE

### BEISPIELE 1 BIS 2

Zu der Basis des Sauermilcherzeugnisses werden die weiteren Zutaten zugegeben, die beim Verbraucher beim Verzehr den Cocktailgeschmack vermittelt.

### Beispiel 1

| **Cocktailjoghurt mit Alkohol (Typ Caipirinha)** | |
|---|---|
| **Komponenten** | **Gew.-%** |
| Magermilch | 55,0 |
| Sahne | 11,5 |
| Zucker | 6,0 |
| Eiweißpulver 80%ig | 2,49 |
| Pitu (Cachaça) | 5,0 |
| Joghurtkultur | 0,01 |
| Limettenzubereitung | 14,0 |
| Brauner Rohrzucker | 6,0 |
| Summe | 100 |

### Beispiel 2

| **Cocktailjoghurt ohne Alkohol (Typ Caipirinha)** | |
|---|---|
| **Komponenten** | **Gew.-%** |
| Magermilch | 58,0 |
| Sahne | 13,3 |
| Zucker | 6,0 |
| Eiweißpulver 80%ig | 2,49 |
| Cachaça-Aroma | 0,2 |
| Joghurtkultur | 0,01 |
| Limettenzubereitung | 14,0 |
| Brauner Rohrzucker | 6,0 |
| Summe | 100 |

Hierbei besteht die Limettenzubereitung aus:

| **Komponenten der Limettenzubereitung** | **Gew.-%** |
|---|---|
| Wasser | 42,5 |
| Zucker | 24,0 |
| Limettensaft | 21,2 |
| Glukose-Fruktosesirup | 6,7 |
| Modifizierte Stärke | 3,5 |
| Verdickungsmittel | 1,3 |
| Säureregulatoren | 0,7 |
| Farbstoffe, Zitronenaroma, Natronlauge | 0,1 |
| Summe | 100 |

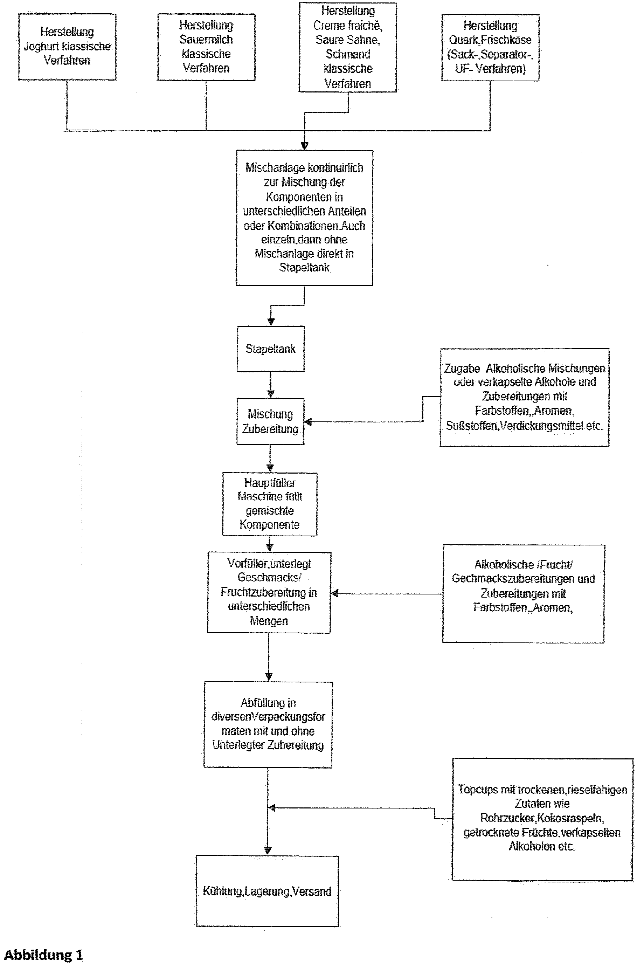

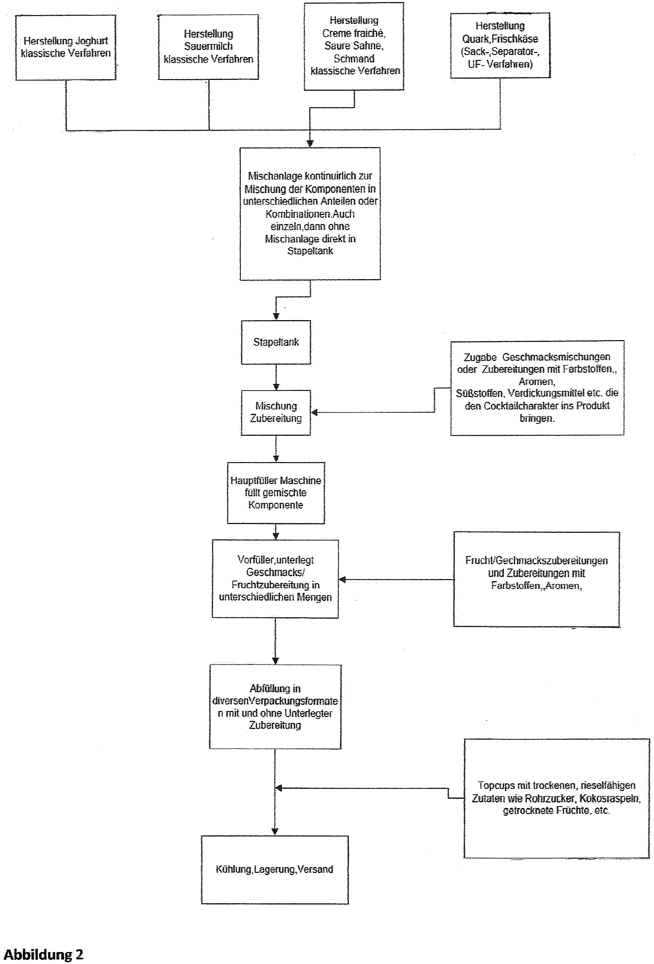

Die Herstellung eines Cocktail-Joghurts mit und ohne Alkohol wird in den nachfolgenden **Abbildungen 1** und 2 an Hand von Fließbildern erläutert.

## Patentansprüche

1. Dessert mit Cocktailgeschmack umfassend
(a) eine Basis aus einem Sauermilcherzeugnis, ausgewählt aus der Gruppe bestehend aus Creme fraîche, Quark, Joghurt, Saure Sahne, Schmand oder Mischungen daraus, und
(b) weitere Zutaten, die dem Verbraucher beim Verzehr eine Cocktail-Geschmacksnote vermittelt.

2. Dessert nach Anspruch 1, **dadurch gekennzeichnet, dass** der Cocktailgeschmack in Richtung Caipirinha, Copacabana, Tequila Sunrise, Malibu Reggae, Cuba Libre, Pina Colada, Mojito, Malibu Mango, Margarita, Hugo oder jede bekannte Cocktailgeschmack geht.

3. Dessert nach Anspruch 1 oder 2, **dadurch gekennzeichnet, dass** die weiteren Zutaten (b) folgende Komponenten umfasst:
(i) 0,001 bis 5,0 Gew.-% Stabilisatoren,
(ii) 0 bis 25 Gew.-% Zucker und/oder Zuckeraustauschstoffe und/oder Süßstoffe,
(iii) 0 bis 5,0 Gew.-% Alkohole
(iv) 0,1 bis 20 Gew.-% Aromastoffe,
(v) 0 bis 80 Gew.-% weitere Additive,
(vi) 0 bis 25 Gew.-% Fruchtzubereitungen,
mit der Maßgabe, dass sich die Komponenten (i) bis (vi) zu 100 Gew.-% addieren.

4. Dessert nach einem der Ansprüche 1 bis 3, **dadurch gekennzeichnet, dass** die Basis für das Dessert Joghurt ist, das aus Joghurtmilch stammt und, welche ausgewählt ist aus Mager-, oder Rahmmilch und im Fettgehalt standardisierte Milch und der Joghurt ein stichfester oder gerührter Joghurt ist und / oder Quark ist, das einen Fettgehalt von unter 65 % aufweist.

5. Dessert nach einem der Ansprüche 1 bis 4, **dadurch gekennzeichnet, dass** der Fettgehalt in der Joghurtmilch von 0., bis 40 Gew.-% liegt.

6. Dessert nach einem der Ansprüche 1 bis 5, **dadurch gekennzeichnet, dass** es sich um ein alkoholhaltiges Dessert handelt, wobei das Dessert einen (Gesamt-) Alkoholgehalt von 0,01 bis 10 Gew.-% aufweist.

7. Dessert nach einem der Ansprüche 1 bis 6, **dadurch gekennzeichnet, dass** es sich um ein alkoholfreies Dessert handelt.

8. Dessert nach Anspruch 7, **dadurch gekennzeichnet, dass** der Cocktailgeschmack durch Aromastoffe (iv) vermittelt wird, so dass das Dessert alkoholfrei ist.

9. Dessert nach einem der Ansprüche 1 bis 7, **dadurch gekennzeichnet, dass** der Alkohol oder die Aromastoffe als Alkoholperlen und/oder-kapseln bzw. Aromaperlen und/oder -kapseln vorliegen, welche beim Verzehr freigesetzt wird.

10. Dessert nach einem der Ansprüche 1 bis 9, **dadurch gekennzeichnet, dass** das Dessert weitere Additive (v) umfasst, ausgewählt aus Süßstoffe, Lebensmittelsäure, Verdickungsmittel, Reduktionsmittel, Aromastoffe, Vitamine, Prebiotische Stoffe, Probiotische Stoffe, Geschmacksverstärker, Wirkstoffe zur Maskierung von unangenehmen Geschmackseindrücken, Antioxidantien, Milcheiweißkonzentrate, Lebensmittelfarbstoffe, Lebensmittelpartikel, wie (brauner Rohr-) Zucker und/oder Kokos(raspeln), (gefrier-) getrocknete Früchte, Schokostücke usw. und Gemischen davon.

11. Dessert nach einem der Ansprüche 1 bis 10, **dadurch gekennzeichnet, dass** das Dessert löffelfähig ist.

12. Verfahren zur Herstellung eines Desserts nach einem der Ansprüche 1 bis 13, **dadurch gekennzeichnet, dass**
(a) eine Basis aus einem Sauermilcherzeugnis, ausgewählt aus der Gruppe bestehend aus Creme fraîche, Quark, Joghurt, Saure Sahne, Schmand oder Mischungen daraus, bereitgestellt wird und mit
(b) weiteren Zutaten,
umfassend
(i) 0.001 bis 5.0 Gew.-% Stabilisatoren,
(ii) 0 bis 25 Gew.-% Zucker und / oder Zuckeraustauschstoffe und / oder Süßstoffe,
(iii) 0 bis 5.0 Gew.-% Alkohol,
(iv) 0,1 bis 20 Gew.-% Aromastoffe,
(v) 0 bis 80 Gew.-% Additive,
(vi) 0 bis 25 Gew.-% Fruchtzubereitung,
versetzt wird, mit der Maßgabe, dass sich die Komponenten (i) bis (vi) zu 100 Gew.-% addieren.

13. Verfahren nach Anspruch 12, wobei als Additive (v) bei den weiteren Zutaten Lebensmittelpartikel verwendet wird, vorzugsweise (gefrier-) getrocknete Früchte, Schokostücke (brauner Rohr-) Zucker und/oder Kokos(raspeln), die vor dem Verzehr separat von der Sauermilchbasis a) vorliegt und erst kurz vor dem Verzehr dazugegeben wird.

14. Verfahren nach Anspruch 12 oder 13, wobei der Cocktail-Geschmack
(a) Caipirinha: durch Limettenzubereitung, Cachaca und braunen Rohzucker;
(b) Tequila Sunrise: durch Orangenzubereitung, eine Mischung aus Tequila und Grenadine;
(c) Malibu Reggae: durch Limettenzubereitung, eine Alkoholmischung aus Malibu, Batida de Coco und Grenadine und braunen Rohrzucker;
(d) Cuba Libre: durch Limettenzubereitung, eine Mischung aus Cola-Zitronenzubereitung, weißem oder braunem Rum und braunen Rohzucker;
(e) Pina Colada: durch Pinacoladazubereitung, weißem oder braunem Rum und Kokosraspeln;
(g) Mojito durch Limettenzubereitung, eine Mischung aus braunem oder weißem Rum und Limetten- und Pfefferminzsirup und braunen Rohrzucker,
(f) Malibu Mango: durch Mangozubereitung, eine Mischung aus weißem oder braunem Rum und Malibu und Kokosraspeln,
kreiert wird.

15. Verwendung
(a) einer Basis aus einem Sauermilcherzeugnis, ausgewählt aus der Gruppe bestehend aus Creme fraîche, Quark, Joghurt, Saure Sahne, Schmand oder Mischungen daraus, und
(b) weiteren Zutaten,
umfassend
(i) 0,001 bis 5.0 Gew.-% Stabilisatoren,
(ii) 0 bis 25 Gew.-% Zucker und / oder Zuckeraustauschstoffe und / oder Süßstoffe,
(iii) 0 bis 5,0 Gew.-% Alkohol,
(iv) 0,1 bis 20 Gew.-% Aromastoffe,
(v) 0 bis 80 Gew.-% Additive,
(vi) 0 bis 25 Gew.-% Fruchtzubereitung,
zur Herstellung eines Cocktail-Desserts.
